# EUROPEAN PATENT APPLICATION

(11) **EP 2 821 305 A1**
(43) Date of publication of application: **07.01.2015**
(21) Application number: 13754273.4
(22) Date of filing: 13.02.2013
(51) Int. Cl.: B60W 10/10, B60K 6/445, B60K 6/547, B60T 8/17, B60W 10/18, B60W 20/00, F16H 61/08

(54) **SHIFT CONTROL SYSTEM FOR ELECTRIC VEHICLE**

(30) Priority: 29.02.2012 JP 2012043919
(71) Applicant: Nissan Motor Co., Ltd, Yokohama-shi, Kanagawa 221-0023 (JP)
(72) Inventor: TOYOTA, Ryohey, Kanagawa 243-0137 (JP)
(74) Representative: Grünecker, Kinkeldey, Stockmair & Schwanhäusser
(86) International application number: PCT/JP2013/053402
(87) International publication number: WO 2013/129112

(57) **Abstract**

In order to prevent deceleration (G) shock due to a braking torque on a driving wheel temporarily reaching zero during a coast down shift, this control system for an electric vehicle is provided with: an automatic transmission (3) that is positioned on a drive train from a motor generator (MG2) to a driving wheel (14), and carries out down shifting according to combination of the disengagement of a friction clutch (9c) and the engagement of an engagement clutch (8c); and a shift controller (21) that carries out shift control of the automatic transmission (3). An integrated controller (30), which carries out regenerative cooperative brake control through a substitution in which a friction torque is increased by a friction braking device (15) provided to the driving wheel (14) by tracking a reduction in a regenerative torque when a regenerative torque is reduced by the second motor generator (M2), is provided to a hybrid vehicle. The shift controller (21) matches the timing of the start of coast down shift control, which involves disengaging the friction clutch (9c), with the timing after at least a substitution involving regenerative cooperative braking control has started.

## Description

### Technical Field

This invention relates to a shift control system for an electric vehicle that includes an automatic transmission which is disposed in a driving system from an electric motor, and which is arranged to perform a downshift by a disengagement of a frictional element and an engagement of an engagement element.

### Background Art

Conventionally, there is known a driving system for a hybrid vehicle which is configured to judge a shift timing at which it is possible to shift so as not to stop a transmission torque to an output shaft when a coast downshift of a combination of an engagement clutch such as a dog clutch which is an engagement element, and a frictional clutch which is a disengagement element is performed.

### Prior Art Document

### Patent Document

Patent Document 1: Japanese Patent Application Publication No. 2010-188795

### Summary of The Invention

### Problems which The Invention Is intended to Solve

However, in the conventional driving system for the hybrid vehicle, when the shift of the combination of the engagement clutch such as the dog clutch which is the engagement element, and the frictional clutch which is the disengagement element is performed, the vehicle is once brought to a neutral state after the disengagement element is disengaged at the downshift control. Then, the engagement element is engaged. Accordingly, there is a problem that the transmission torque to the output shaft temporarily becomes zero during the coast downshift, and the driver feels the deceleration G drop shock.

It is, therefore, an object of the present invention to provide a shift control device for an electric vehicle which is devised to dissolve the above-described problems, and to prevent a deceleration G drop shock by the braking torque to the driving wheels temporarily becoming zero at the coast downshift.

### Means for Solving The Problem

For dissolving the above-described object, the shift control device for the electric vehicle according to the present invention includes an automatic transmission which is disposed in a driving system from an electric motor to driving wheels, and which is arranged to perform a downshift by a combination of a disengagement of a frictional element and an engagement of an engagement element.

This shift control device for the electric vehicle includes a regenerative cooperative brake control means configured to perform a regenerative cooperative brake control by a switching to increase a frictional torque by a frictional brake device provided to the driving wheel to follow a decrease of a regenerative torque when the regenerative torque by the electric motor is decreased.

The shift control means sets a timing of a start of a coast downshift to disengage the frictional element, at least to a timing after a start of the switching by the regenerative cooperative brake control.

### Benefit of The Invention

Accordingly, when the coast downshift control to disengage the frictional element is started, it is possible to set (adjust) the timing of the start of the coast downshift, at least to the timing after the start of the switching by the regenerative cooperative brake control.

That is, when the switching on the regenerative cooperative brake control side is started, the frictional torque by the frictional brake device is increased. Accordingly, even when the transmission torque by the frictional element which is disengaged is decreased at the coast downshift after the neutral state, the transmission torques (= the brake torques) to the driving wheels do not become zero. Consequently, it is possible to prevent the deceleration G drop shock by the brake torque to the driving wheels temporarily becoming zero at the coast downshift.

### Brief Description of Drawings

FIG. 1 is an overall schematic view showing a driving system configuration and a shift control system configuration of a hybrid vehicle to which a shift control device according to a first embodiment is applied.
FIG. 2 is a shift map view showing one example of an upshift line and a downshift line of an automatic transmission in the shift control device according to the first embodiment.
FIG. 3 is a flowchart showing a flow of a coast downshift control operation from a high speed stage to a low speed stage, which is performed in a shift controller according to the first embodiment.
FIG. 4 is a flowchart showing a flow of a coast downshift control operation from a high speed stage to a low speed stage, which is performed in a shift controller according to a second embodiment.
FIG. 5 is a time chart showing characteristics of a shift stage, a vehicle acceleration, a hydraulic pressure brake (motor shaft torque conversion), a 2nd clutch transmission torque (= motor torque), a motor rotation speed, a 2nd clutch pressing force, and a synchronous pressing force when a coast downshift control is performed in the shift controller according to the second embodiment.
FIG. 6 is a flowchart showing a flow of a coast downshift control operation from a high speed stage to a low speed stage, which is performed in a shift controller according to a third embodiment.
FIG. 7 is a time chart showing characteristics of a shift stage, a vehicle acceleration, a hydraulic pressure brake (motor shaft torque conversion), a 2nd clutch transmission torque (= motor torque), a motor rotation speed, a 2nd clutch pressing force, and a synchronous pressing force when the coast downshift control (2nd→1st) is performed in the shift controller according to the third embodiment.
FIG. 8 is a schematic view showing one example of a driving system for an electric vehicle when the shift control according to the present invention is applied to an electric vehicle.

### Description of Embodiments

Hereinafter, a best mode for carrying out a shift control system for an electric vehicle according to the present invention is explained based on first to third embodiments shown in drawings.

### First Embodiment

First, a configuration is explained.

A configuration of a shift control system for a hybrid vehicle (one example of an electric vehicle) according to a first embodiment is explained as to "driving system configuration", "shift control system configuration", and "coast downshift control configuration".

### [Driving System Configuration]

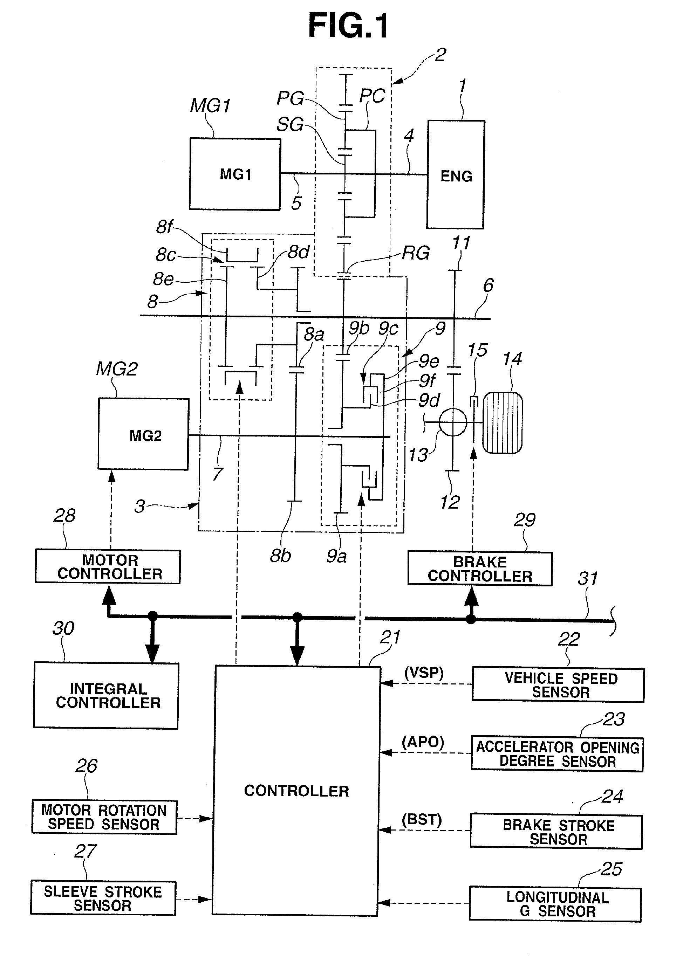

FIG. 1 shows a driving system configuration for a hybrid vehicle to which a shift control device according to the first embodiment is applied. Hereinafter, the driving system configuration is explained based on FIG. 1.

As shown in FIG. 1, the driving system configuration according to the first embodiment includes an engine 1, a first motor generator MG1, a second motor generator MG2 (electric motor), a power distribution device (power transfer) 2, and an automatic transmission 3.

The engine 1 is an internal combustion engine. The engine 1 includes an engine output shaft 4 which is a crank shaft, and which is connected with a pinion carrier PC of the power distribution device 2.

The first motor generator MG1 is mainly used as a generator. The first motor generator MG1 includes a first motor output shaft 5 which is disposed coaxially to the engine output shaft 4, and which is connected with a sun gear SG of the power distribution device 2.

The second motor generator MG2 is mainly used as an electric motor. The second motor generator MG2 includes a motor shaft which is connected with a transmission input shaft 7 of the automatic transmission 3.

In this case, the transmission input shaft 7 and a transmission output shaft 6 of the automatic transmission 3 are disposed, respectively, in parallel to arrangement shaft lines of the both output shafts 4 and 5 which are disposed coaxially to each other.

The power distribution device 2 is arranged to distribute the power of the engine 1 to the first motor generator MG1 and the transmission output shaft 6 of the automatic transmission 3. The power distribution device 2 is constituted by a simple planetary gear set. The simple planetary gear set includes a center sun gear SG, a ring gear RG which surrounds the sun gear SG, and which is concentric with the sun gear SG, a plurality of pinions PG which are engaged with the sun gear SG and the ring gear RG, and a pinion carrier PC which rotatably supports the pinions PG. In the three rotation members (SG, PC, RG) of the power distribution device 2, the pinion carrier PC is connected with the engine 1, the sun gear SG is connected with the first motor generator MG1, and the ring gear RG is engaged with a gear 9b disposed on the transmission output shaft 6.

The automatic transmission 3 is a normally-engaged transmission arranged to transmit the power by one (either) of two gear pairs having different transmission gear ratios. The automatic transmission 3 has two stepped shift including a high side gear stage (high speed stage) having a small reduction ratio, and a low side gear stage (low speed stage) having a large reduction ratio. This automatic transmission 3 is used for a shift when the motor power is outputted from the second motor generator MG2 through the transmission input shaft 7 and the transmission output shaft 6. The automatic transmission 3 includes a low side shift mechanism 8 arranged to attain the low speed stage, and a high side shift mechanism 9 arranged to attain the high speed stage.

The low side shift mechanism 8 is arranged to select the low side transmission path at the output of the motor power. The low side shift mechanism 8 is disposed on the transmission output shaft 6. This low side shift mechanism 8 includes low speed stage gear pairs (a gear 8a and a gear 8b) which are arranged to perform a rotation engagement/rotation engagement disengagement of the gear 8a with respect to the transmission output shaft 6 so as to drivingly connect the transmission output shaft 6 and the transmission input shaft 7. The low side shift mechanism 8 is constituted by an engagement clutch 8c which is engaged by a synchronous meshing. In this case, the low speed gear pairs include the gear 8a which is rotationally supported on the transmission output shaft 6, and the gear 8b which is meshed with the gear 8a, and which is rotated together with the transmission input shaft 7.

The engagement clutch 8c includes a clutch gear 8d which is provided to the gear 8a, a clutch hub 8e which is connected with the transmission output shaft 6, and a coupling sleeve 8f. The clutch gear 8d and the clutch hub 8e include, respectively, clutch teeth which are formed on outer circumferences of the clutch gear 8d and the clutch hub 8e, and which have the same specification.

When the coupling sleeve 8f is positioned at a meshing position which is shown in FIG. 1, and at which the coupling sleeve 8f is engaged with the outer circumference clutch teeth of the clutch gear 8d and the clutch hub 8e, the engagement clutch 8c connects the gear 8a to the transmission output shaft 6. On the other hand, when the coupling sleeve 8f is positioned at a non-meshing position at which the coupling sleeve 8f is not engaged with one of the outer circumference clutch teeth of the clutch gear 8d and the clutch hub 8e by shifting in the axial direction from the position shown in FIG. 1, the engagement clutch 8c separates the gear 8a from the transmission output shaft 6. Besides, the axial shift of the coupling sleeve 8f is performed by an actuator (not shown).

The high side shift mechanism 9 is arranged to select the high side transmission path at the output of the motor power. The high side shift mechanism 9 is disposed on the transmission input shaft 7. This high side shift mechanism 9 includes high speed stage gear pairs (a gear 9a and a gear 9b) which is arranged to perform a frictional connection/frictional connection disengagement of the gear 9a with respect to the transmission input shaft 7 so as to drivingly connect the transmission output shaft 6 and the transmission input shaft 7. The high side shift mechanism 9 is constituted by a frictional clutch 9c which is a hydraulic frictional engagement, as described below. In this case, the high speed stage gear pairs include the gear 9a which is rotatably supported on the transmission input shaft 7, and the gear 9b which is engaged with the gear 9a, and which is rotated together with the transmission output shaft 6.

The frictional clutch 9c includes a driven side clutch disc 9d which is rotated together with the gear 9a, a driving side clutch disc 9e which is rotated together with the transmission input shaft 7, and a hydraulic clutch piston 9f. The frictional clutch 9c functions as follows. When the clutch piston 9f performs the engagement operation to frictionally contact the clutch discs 9d and 9e by the actuation hydraulic pressure, the frictional clutch 9c drivingly connects the gear 9a to the transmission input shaft 7. On the other hand, when the clutch piston 9f performs the disengagement operation to disengage the frictional contact of the clutch discs 9d and 9e by draining the actuation hydraulic pressure, the frictional clutch 9c separates the driving connection of the gear 9a and the transmission input shaft 7.

A gear 11 is fixed on the transmission output shaft 6. A differential gear device 13 is drivingly connected to the transmission output shaft 6 through a final drive gear set including this gear 11 and a gear 12 engaged with this gear 11. With this, the motor power of the second motor generator MG2 reaching the transmission output shaft 6 is transmitted to left and right driving wheels 14 (besides, FIG. 1 shows the only one of the driving wheels) through the final drive gear set 11 and 12, and the differential gear device 13. Besides, the driving wheels 14 are provided with frictional braking devices 15 which are hydraulic pressure brakes and so on.

### [Shift Control System Configuration]

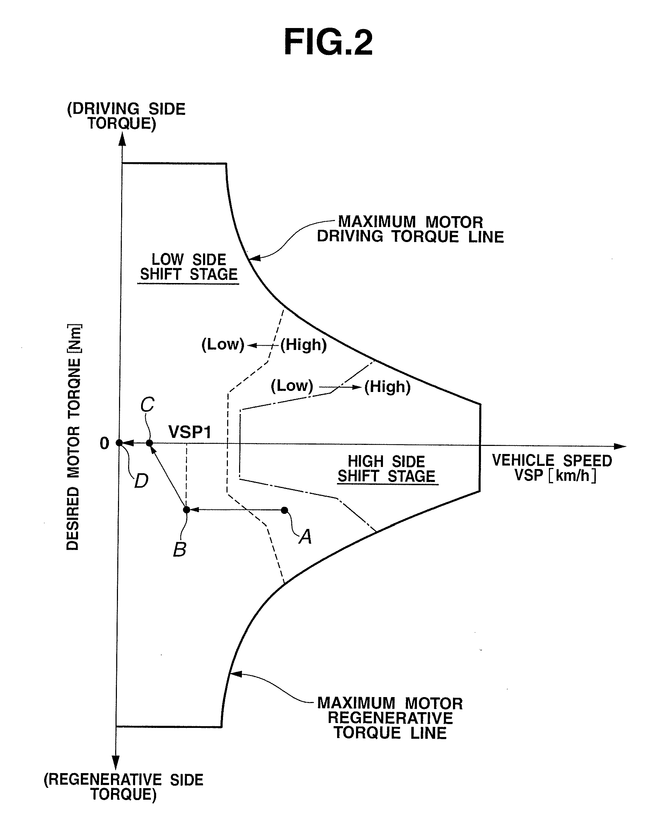

FIG. 1 shows a shift control system configuration for a hybrid vehicle to which the shift control device according to the first embodiment is applied. FIG. 2 shows a shift map of the automatic transmission. Hereinafter, the shift control system configuration is explained based on FIG. 1 and FIG. 2.

As shown in FIG. 1, the shift control system configuration according to the first embodiment includes a shift controller 21 (shift control means), a vehicle speed sensor 22, an accelerator opening degree sensor 23, a brake stroke sensor 24, a longitudinal G sensor 25, a motor rotation speed sensor 26, a sleeve stroke (movement) sensor 27, and so on. In addition to these, the shift control system configuration includes a motor controller 28, a brake controller 29, an integral controller 30 (regenerative cooperative brake control means), and a CAN communication line 31.

At the shift of the automatic transmission 3, the shift controller 21 performs a shift switching control of the meshing/non-meshing of the engagement clutch 8c (the coupling sleeve 8f), and a hydraulic pressure actuation control of the disengagement/the engagement of the frictional clutch 9c (the clutch piston 9f). This shift controller 21 receives a vehicle speed VSP from the vehicle speed sensor 22, an accelerator opening degree APO from the accelerator opening degree sensor 23, and a brake stroke amount BST from the brake stroke sensor 24. Then, this shift controller 21 performs the shift control of the automatic transmission 3 based on the shift map exemplified in FIG. 2 from these input information, as described below.

In the shift map of FIG. 2, a bold solid line shows a maximum motor driving torque line obtained by connecting maximum motor driving torque values of the second motor generator MG2 at respective vehicle speeds, and a maximum motor regenerative torque line obtained by connecting maximum motor regenerative torque values of the second motor generator MG2 at respective vehicle speeds. A region surrounded by these is an actual use permission region.

In this actual use permission region, an upshift line (Low→High) shown by one dot line and a downshift line (High→Low) shown by a broken line are set in consideration of a transmission loss of the automatic transmission 3 and a motor loss of the second motor generator 2. Besides, the upshift line (Low→High) is set on the higher vehicle speed side by a hysteresis amount, relative to the downshift line (High→Low).

When the accelerator pedal is depressed, the shift controller 21 determines a driving point from a desired motor driving torque determined from the accelerator opening degree APO, and the vehicle speed VSP. When the brake pedal is depressed, the shift controller 21 determines the driving point by the desired motor regenerative torque determined from the brake stroke amount BST, and the vehicle speed VSP.

After the driving point is determined, a target shift stage (the low speed stage (low shift stage) or the high speed stage (high shift stage)) which is preferable for the current driving state is determined by whether the driving point exists in the low side shift stage region or the high side shift stage region of the shift map of FIG. 2.

Next, when the determined target shift stage is the low speed stage, the low speed stage in which the engagement clutch 8c is brought to the engagement state and the frictional clutch 9c is brought to the disengagement state is selected. Moreover, when the determined target shift stage is the high speed stage, the high speed stage in which the frictional clutch 9c is brought to the engagement state and the engagement clutch 8c is brought to the disengagement state is selected.

In case of the state of selecting the low speed stage (the actual shift stage = the low speed stage), when the driving point within the actual use permission region enters the high side shift stage region beyond the upshift line (Low→High), the target shift stage is selected to the high speed stage, and the automatic transmission 3 is upshifted from the low speed stage to the high speed stage. On the other hand, in case of the state of selecting the high speed stage (the actual shift stage = the high speed stage), when the driving point within the actual use permission region enters the low side shift stage region beyond the downshift line (High→Low), the target shift stage is switched to the low speed stage, and the automatic transmission 3 is downshifted from the high speed stage to the low speed stage.

The motor controller 28 controls the power running/regeneration of the second motor generator MG2. The brake controller 29 controls the braking hydraulic pressure (the frictional torque) of the frictional braking device 15. The integral controller 30 is connected through the CAN communication line 31 to the shift controller 21, the motor controller 28, and the brake controller 29 to exchange the information. This integral controller 30 performs a regenerative cooperative brake control to maintain a total braking torque by switching (substitution) to increase the frictional torque by the frictional braking devices 15 provided to the driving wheels 14 so as to follow the decrease of the regenerative torque when the regenerative torque by the second motor generator MG2 is decreased when the vehicle speed becomes equal to or smaller than a predetermined vehicle speed (a switching vehicle speed) during the regenerative deceleration.

### [Coast Downshift Control Configuration]

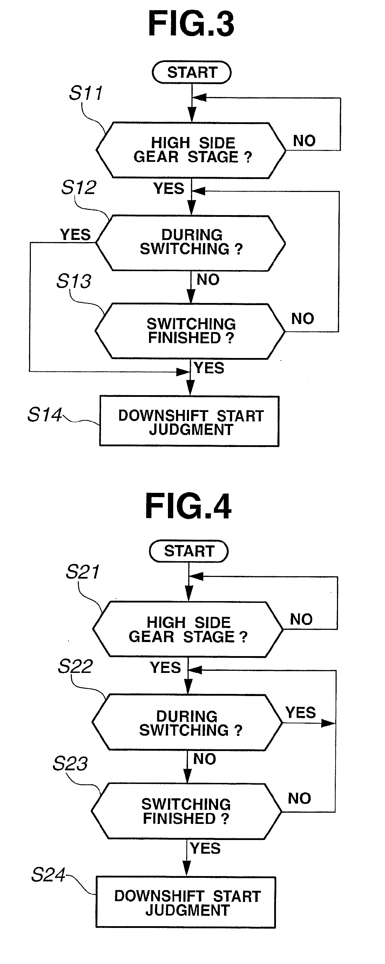

FIG. 3 shows a flow of a coast downshift control operation from the high speed stage to the low speed stage, which is performed in the shift controller 21 according to the first embodiment (the shift control means). Hereinafter, steps of FIG. 3 which represent the coast downshift control operation configuration are explained.

At step S11, it is judged whether or not the high speed stage (the high side gear stage) is selected in the coast state by releasing the foot from the accelerator, and during the regeneration of the second motor generator MG2. In case of YES (when the high speed stage is selected), the process proceeds to step S12. In case of NO (when the low speed stage is selected), the process repeats the judgment of step S11.

Subsequently to the judgment of step S11 that the high speed stage is selected, or the judgment of step S13 that the switching is not finished, at step S12, it is judged whether or not the vehicle is during the switching by the increase of the frictional torque and the decrease of the regenerative torque by the regenerative cooperative brake control. In case of YES (during the switching), the process proceeds to step S14. In case of NO (not during the switching), the process proceeds to step S13.

Subsequently to the judgment of step S12 that the vehicle is not during the switching, at step S13, it is judged whether or not the switching by the decrease of the regenerative torque and the increase of the frictional torque is finished. In case of YES (the switching is finished), the process proceeds to step S14. In case of NO (the switching is not finished), the process returns to step S12.

Subsequently to the judgment of step S12 that the vehicle is during the switching, or the judgment of step S13 that the switching is finished, at step S14, the start of the coast downshift from the high speed stage to the low speed stage is judged (determined). The coast downshift control to disengage the frictional clutch 9c, and to engage the engagement clutch 8c by forming the rotation synchronous state is performed.

Next, operations are explained.

The operations in the shift control device for the hybrid vehicle according to the first embodiment are explained as to "basic driving operation by hybrid driving system", and "coast downshift control operation".

### [Basic Driving Operation by Hybrid Driving System]

First, the basic driving operations by the hybrid driving system are explained.

The engine 1 drives the first motor generator MG1 through the power distribution device 2. The electric power generated by this first motor generator MG1 is stored in a battery (not shown).

The second motor generator MG2 is driven by obtaining the above-described electric power of the battery. The motor power from the second motor generator MG2 is transmitted through the automatic transmission 3 as follows.

When the engagement clutch 8c of the automatic transmission 3 is in the disengagement state and the frictional clutch 9c is in the disengagement state, the vehicle is in the neutral state in which the motor power from the second motor generator MG2 is not transmitted from the transmission input shaft 7 to the transmission output shaft 6. It is possible to stop the vehicle.

Then, for example, when the engagement clutch 8c of the automatic transmission 3 is brought to the meshing (engagement) state from the neutral state, the low speed stage in which the motor power from the second motor generator MG2 can be transmitted by the low speed stage gear pairs 8a and 8b from the transmission input shaft 7 to the transmission output shaft 6 is selected.

In this state of selecting the low speed stage, the motor power to the transmission input shaft 7 is directed to the driving wheels 14 through the low speed stage gear pairs 8a and 8b→the engagement clutch 8c in the meshing state→the transmission output shaft 6→the final drive gear set 11 and 12→the differential gear device 13. It is possible to run the vehicle at the low speed.

Moreover, for example, when the engagement clutch 8c of the automatic transmission 3 is brought to the non-meshing state and the frictional clutch 9c is brought to the engagement state from the state of selecting the low speed stage, the vehicle is brought to the state of selecting the high speed stage in which the motor power from the second motor generator MG2 can be transmitted by the high speed stage gear pairs 9a and 9b from the transmission input shaft 7 to the transmission output shaft 6.

In this state of selecting the high speed stage, the motor power to the transmission input shaft 7 is directed to the driving wheels 14 through the high speed stage gear pairs 9a and 9b → the frictional clutch 9c in the engagement state → the transmission output shaft 6 → the final drive gear set 11 and 12 → the differential gear device 13. Accordingly, it is possible to run the vehicle at the high speed.

At the regenerative braking in the first motor generator MG1 at the above-described low speed/high speed running, the load for the generation is provided to the first motor generator MG1. With this, the first motor generator MG1 driven through the power distribution device 2 by the gear 9b rotating together with the transmission output shaft 6 constantly connected with the driving wheels 14 performs the generation in accordance with the load for the generation, and performs a predetermined regenerative braking. Then, the electric power generated at this time can be stored in the battery.

Besides, the first motor generator MG1 is used not only as the generator as described above, but also as an electric motor to compensate for the power deficiency when the vehicle is in a driving state in which the power is deficient only by the power from the second motor generator MG2. At this time, the engine 1 can be driven to compensate for the power deficiency if necessary.

On the other hand, at the regenerative braking by the second motor generator MG2 during the above-described low speed/high speed running when the engine 1 is stopped and the first motor generator MG1 does not generate the torque, the load for the generation is provided to the second motor generator MG2. With this, the second motor generator MG2 driven by the driving wheels 14 through the automatic transmission 3 performs the generation in accordance with the load for the generation, and performs the predetermined regenerative braking. Then, the electric power generated at this time can be stored in the battery.

At this regenerative braking by the second motor generator MG2, when the vehicle speed is decreased into the low vehicle speed region, the regenerative torque which can be recycled is gradually decreased. In a vehicle stop region from a timing immediately before the vehicle stop, it is necessary that the vehicle is stopped by the frictional torque by the frictional braking devices 15 provided to the driving wheels 14. Accordingly, when the vehicle speed becomes equal to or smaller than a predetermined vehicle speed and the regenerative torque by the second motor generator MG2 is decreased, the regenerative cooperative braking control to maintain the total braking torque by the switching to increase the frictional torque by the frictional braking devices 15 provided to the driving wheels 14 to follow (in accordance with) the decrease of the regenerative torque is performed.

### [Coast Downshift Control Operation]

At the coast downshift, the frictional clutch 9c is disengaged. However, after the frictional clutch 9c is fully disengaged, the vehicle is once brought to the neutral state. When it becomes the rotation synchronous state, the engagement clutch 8c is engaged by meshing by the synchronous pressing force. Accordingly, the braking torques acted to the driving wheels 14 are temporarily dropped (released). It is necessary to devise to avoid this braking torque drop (release). Hereinafter, the coast downshift control operation to reflect this is explained.

At the deceleration at which the coast downshift is performed during the regeneration by the second motor generator MG2, it is necessary that the regenerative torque by the second motor generator MG2 is decreased in accordance with the decrease of the vehicle speed. When this regenerative torque is decreased, the regenerative cooperative brake control to maintain the total braking torque by the switching to increase the frictional torque by the frictional braking device 15 provided to the driving wheel 14 to follow the decrease of the regenerative torque as described above is performed.

Accordingly, in the coast downshift control according to the first embodiment, the timing of the start of the coast downshift control to disengage the frictional clutch 9c is set (adjusted) to a timing after the start of the switching of the regenerative cooperative brake control, by focusing on the switching of the frictional torque and the regenerative torque in the regenerative cooperative brake control.

For example, the vehicle speed VSP is decreased during the regenerative deceleration at the high speed stage by the driving point A of FIG. 2. By moving across the downshift line (High→Low), the downshift control command is outputted. Moreover, the vehicle speed VSP is decreased. Then, when the vehicle is shifted to the driving point B at which the vehicle speed VSP becomes the switching vehicle speed VSP1, the switching of the regenerative cooperative brake control is started from the driving point B. The regenerative torque is decreased. The regenerative torque becomes zero at the driving point C. After that, the regenerative torque is maintained to zero. The vehicle is stopped at the driving point D.

In this way, when the downshift control command is outputted when the high speed stage is selected, the process proceeds along step S11→step S12→step S13 in the flowchart of FIG. 3 before the start of the switching of the regenerative torque and the frictional torque. Then, the process repeats the flow of step S12→step S13, so as to wait for the start of the downshift. Then, the switching of the regenerative torque and the frictional torque is started by the decrease of the vehicle speed. The process proceeds from step S12 to step S14. At step S14, the downshift start judgment is performed.

Besides, the process proceeds along step S11→step S12→step S14 in the flowchart of FIG. 3 during the switching when the switching of the regenerative torque and the frictional torque is already started. At step S14, the downshift start judgment is performed. Moreover, the process proceeds along step S11→step S12→step S13→step S14 in the flowchart of FIG. 3 after the completion of the switching when the switching of the regenerative torque and the frictional torque is already completed. At step S14, the downshift start judgment is performed.

That is, in the first embodiment, the timing of the start of the coast downshift to disengage the frictional clutch 9c is set to one timing of a region of the start of the switching of the regenerative control ~ the end ~ the stop of the vehicle.

This is for the following reasons. When the switching on the regenerative cooperative brake control side is started, the frictional torques by the frictional braking devices 15 are increased. Accordingly, even when the driving transmission system from the second motor generator MG2 is separated, it is possible to ensure the braking torques of the driving wheels 14. That is, at the coast downshift after the start of the switching, the transmission torque by the frictional clutch 9c which is disengaged is decreased. The vehicle is once brought to the neutral state. However, the transmission torques (= the braking torques) to the driving wheels 14 do not temporarily become zero, by the generation of the frictional torque by the amount of the switching of the regenerative torque. Accordingly, it is possible to prevent the shock of the deceleration G drop (release) by the braking forces to the driving wheels 14 temporarily becoming zero at the coast downshift.

### Next, effects are illustrated.

The shift control device for the hybrid vehicle according to the first embodiment can obtain the following effects.
(1) The shift control device for the electric vehicle (the hybrid vehicle) including an automatic transmission 3 disposed in the driving system from the electric motor (the second motor generator MG2) to the driving wheel 14, and arranged to perform a downshift by combining the disengagement of the frictional element (frictional clutch 9c), and the engagement of the engagement element (the engagement clutch 8c), the shift control device includes a regenerative cooperative brake control means (integral controller 30) configured to perform a regenerative cooperative brake control by a switching to increase the frictional torque by the frictional braking device 15 provided to the driving wheel 14 to follow (in accordance with) the decrease of the regenerative torque when the regenerative torque by the electric motor (the second motor generator MG2) is decreased,
   the shift control means (the shift controller 21) being configured to set the timing of the start of the coast downshift at which the frictional element (the frictional clutch 9c) is disengage, to at least a timing after the start of the switching of the regenerative cooperative brake control (FIG. 3).

Therefore, it is possible to prevent the shock of the deceleration G drop (release) by the braking torque to the driving wheel 14 temporarily becoming zero at the coast downshift.

### Second Embodiment

A second embodiment is an example in which the timing of the start of the coast downshift control to disengage the frictional clutch is set (adjusted) to a timing after a timing of the end of the switching of the regenerative cooperative braking.

### First, a configuration is explained.

FIG. 4 shows a flow of the coast downshift control operation from the high speed stage to the low speed stage, which is performed in the shift controller 21 according to the second embodiment (the shift control means). Hereinafter, steps of FIG. 4 representing the coast downshift control operation configuration are explained.

At step S21, it is judged whether or not the high speed stage (the high side gear stage) is selected during the regeneration by the second motor generator MG2 in the coast state by releasing the foot from the accelerator. In case of YES (when the high speed stage is selected), the process proceeds to step S22. In case of NO (when the low speed stage is selected), the process repeats the judgment of step S21.

Subsequently to the judgment of step S21 that the high speed stage is selected, the judgment of step S22 that the vehicle is during the switching, or the judgment of step S23 that the switching is not finished, at step S22, it is judged whether or not the vehicle is during the switching by the decrease of the regenerative torque and the increase of the frictional torque. In case of YES (during the switching), the process repeats the judgment of step S22. In case of NO (not during the switching), the process proceeds to step S23.

Subsequently to the judgment of step S22 that the vehicle is not during the switching, at step S23, it is judged whether or not the switching by the decrease of the regenerative torque and the increase of the frictional torque is finished. In case of YES (when the switching is finished), the process proceeds to step S24. In case of NO (when the switching is not finished), the process returns to step S22.

Subsequently to the judgment of step S23 that the switching is finished, at step S24, the coast downshift start judgment from the high speed stage to the low speed stage is performed. The coast downshift to disengage the frictional clutch 9c, and to engage the engagement clutch 8c is performed.

Besides, the structures of FIG. 1 and FIG. 2 are identical to those of the first embodiment. Accordingly, the drawings and explanation are omitted.

Next, the coast downshift control operation according to the second embodiment is explained.

In the coast downshift control according to the second embodiment, the timing of the start of the coast downshift control to disengage the frictional clutch 9c is set to a timing after the end of the switching at the regenerative cooperative brake control, by focusing on the matter that all of the regenerative torque is switched to the frictional torque at the timing at which the switching of the regenerative cooperative brake control is finished.

For example, the vehicle speed VSP is decreased during the regenerative deceleration at the high speed stage at the driving point A of FIG. 2. By moving across the downshift line (High→Low), the downshift control command is outputted. Moreover, the vehicle speed VSP is decreased. At this time, the process proceeds along step S21→step S22→step S23 in the flowchart of FIG. 4 before the start of the switching of the regenerative torque and the frictional torque. Then, the process repeats the flow of step S22→step S23. Then, in a case where the vehicle is during the switching from the driving point B to the driving point C even when the switching of the regenerative torque and the frictional torque is started at the driving point B of FIG. 2, the process repeats the judgment of step S22. Then, when it reaches the driving point C and the switching is finished, the process proceeds from step S22 along step S23→step S24. At step S24, the downshift start judgment is performed.

That is, in the second embodiment, the timing of the start of the coast downshift control to disengage the frictional clutch 9c is set to one timing of a region from the end of the switching of the regenerative cooperative brake control ~ the stop of the vehicle.

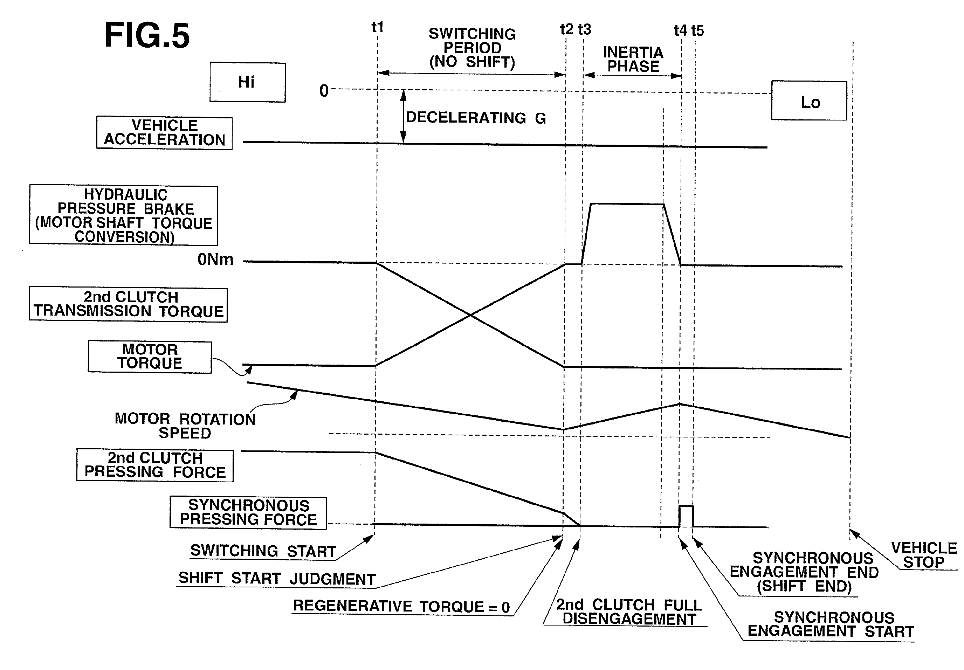

FIG. 5 shows a time chart in the second embodiment in which the timing of the start of the coast downshift control is set to the timing of the end of the switching at the regenerative cooperative brake control.

The switching of the regenerative cooperative brake control is started at time t1, and the frictional torque by the frictional braking device 15 is increased at a constant gradient (decrease in the torque conversion of the motor shaft), and the regenerative torque of the second motor generator MG2 is decreased at a constant gradient (the increase of the motor torque characteristic). When the switching period is finished at time t2, the frictional torque by the frictional brake device 15 becomes a value corresponding to the regenerative torque at time t1, and the regenerative torque of the second motor generator MG2 becomes zero. Besides, the pressing force (2nd clutch depressing force) of the frictional clutch 9c is gradually decreased from time t1 to time t2.

Then, at time t2 at which the switching is finished, the coast downshift start judgment is performed. The frictional clutch 9c is disengaged while the regenerative torque is remained to zero. At time t3, the disengagement of the frictional clutch 9c is finished. A period from the frictional clutch disengagement completion time t3 to the time t4 is an inertia phase in a neutral state. In this period of time t3-t4, the power running torque is provided to the second motor generator MG2. The input rotation speed of the automatic transmission 3 (= the motor rotation speed) is increased toward the target input rotation speed at the low speed stage. Then, when the engagement clutch 8c is synchronously rotated at time t4, the synchronous engagement is started in accordance with the synchronous pressing force. Then, at time t5, the synchronous engagement is finished, and the coast downshift from the high speed stage to the low speed stage is finished.

In this way, in a case where the timing of the start of the coast downshift control is set to the timing of the end of the switching at the regenerative cooperative brake control, at time t2 at which the switching is finished, the regenerative torque at the time t1 at which the switching is started is generated as the frictional torque of the amount of the switching. Accordingly, the braking torque to the driving wheels 14 are maintained constant from the time t1 at which the switching is started, to the time t3 at which the frictional clutch disengagement is completed. The deceleration G is maintained constant. Consequently, it is possible to ensure the good shift performance to suppress the shock of the deceleration G drop.

Besides, other functions are identical to those of the first embodiment. Accordingly, the explanations are omitted.

Next, effects are illustrated.

The shift control device for the hybrid vehicle according to the second embodiment can attain the following effects.
(2) The shift control means (the shift controller 21) is configured to set a timing of the start of the coast downshift control to disengage the frictional element (the frictional clutch 9c), to a timing at which the switching by the regenerative cooperative brake control means (the integral controller 30) is finished (FIG. 4).

Accordingly, in addition to the effect (1) of the first embodiment, the coast downshift control is started after the end of the switching is waited, it is possible to ensure the good shift performance to suppress the shock of the deceleration G drop.

### Third Embodiment

A third embodiment is an example in which the timing of the start of the coast downshift control to disengage the frictional clutch is a shock permission timing during the switching.

First, a configuration is explained.

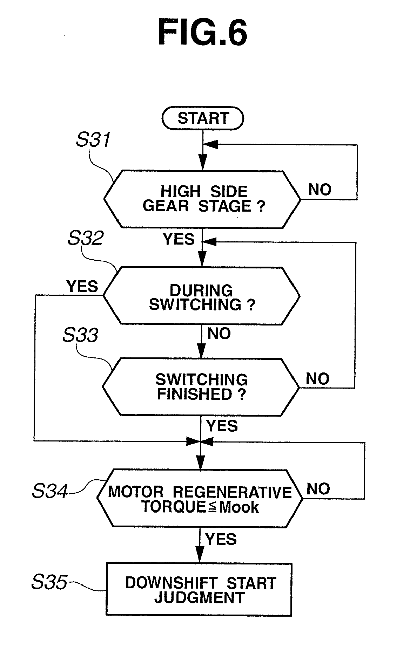

FIG. 6 shows a flow of a coast downshift control operation from the high speed stage to the low speed stage, which is performed in the shift controller 21 according to the third embodiment (the shift control means). Hereinafter, steps of FIG. 6 representing the coast downshift control operation configuration are explained.

At step S31, it is judged whether or not the high speed stage (the high side gear stage) is selected during the regeneration by the second motor generator MG2 in the coast state by releasing the foot from the accelerator. In case of YES (when the high speed stage is selected), the process proceeds to step S32. In case of NO (when the low speed stage is selected), the process repeats the judgment of step S31.

Subsequently to the judgment of step S31 that the high speed stage is selected, or the judgment of step S33 that the switching is not finished, at step S32, it is judged whether or not the vehicle is during the switching by the decrease of the regenerative torque and the increase of the frictional torque. In case of YES (during the switching), the process proceeds to step S34. In case of NO (not during the switching), the process proceeds to step S33.

Subsequently to the judgment of step S32 that the vehicle is not during the switching, at step S33, it is judged whether or not the switching by the decrease of the regenerative torque and the increase of the frictional torque is finished. In case of YES (the switching is finished), the process proceeds to step S34. In case of NO (the switching is not finished), the process returns to step S32.

Subsequently to the judgment of step S32 that the vehicle is during the switching, the judgment of step S33 that the switching is finished, or the judgment of step S34 of the motor regenerative torque > Mook, at step S34, it is judged whether or not the motor regenerative torque is decreased equal to or smaller than a motor torque step Mook at which the shock is allowed. In case of YES (the motor regenerative torque ≤ Mook), the process proceeds to step S35. In case of NO (the motor regenerative torque > Mook), the process repeats the judgment of step S34.

In this case, the calculation method of the motor torque step Mook is described as follows.

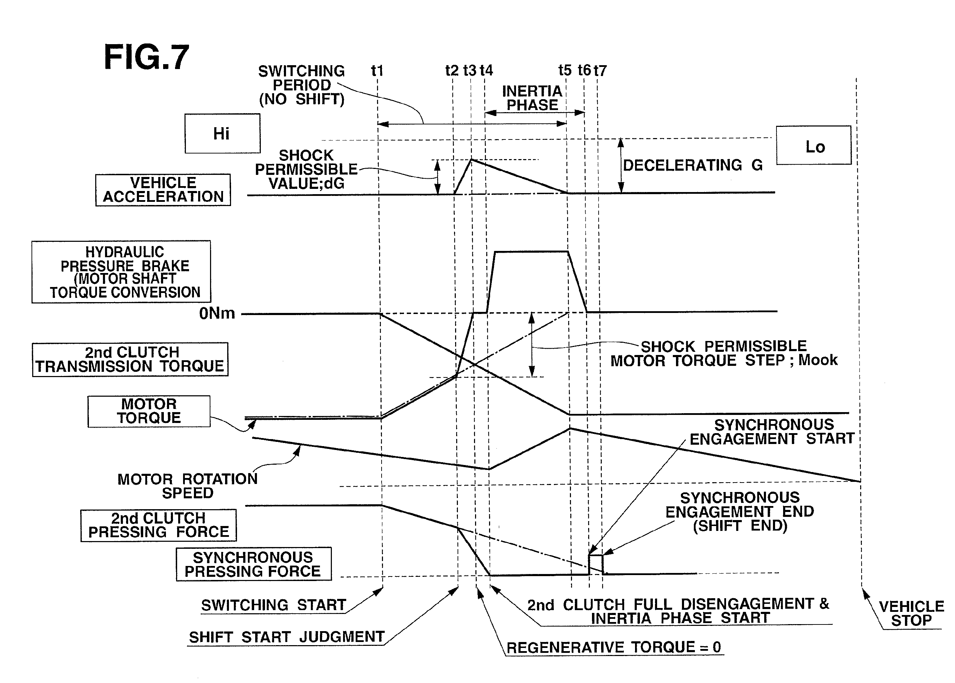

A shock allowable value dG (cf. FIG. 7) of the vehicle acceleration [m/s^2] at the target coast downshift is previously determined.

Then, the motor torque step Mook is calculated by using (dG×anticipated vehicle weight)×anticipated tire working (movement) radius÷through gear ratio of High gear = Mook which is a relative equation between the shock permissible value dG and the motor torque step Mook.

Subsequently to the judgment of the motor regenerative torque ≤ Mook at step S34, at step S35, the coast downshift start judgment from the high speed stage to the low speed stage is performed. The coast downshift to disengage the frictional clutch 9c, and to engage the engagement clutch 8c is performed.

Besides, the structures of FIG. 1 and FIG. 2 are identical to those of the first embodiment. Accordingly, the drawings and the explanation are omitted.

Next, the coast downshift control operation of the third embodiment is explained.

In the coast downshift control according to the third embodiment, the timing of the start of the coast downshift control to disengage the frictional clutch 9c is set to a timing during the switching at the regenerative cooperative brake control at which the shock is allowed, by focusing on the matter that the response of the re-acceleration request is decreased with respect to the interposition when the start of the coast downshift is waited at a timing at which the switching at the regenerative cooperative brake control is finished.

For example, when the vehicle speed VSP is decreased during the regenerative deceleration at the high speed stage at the driving point A of FIG. 2. By moving across the downshift line (High→Low), the downshift control command is outputted. Moreover, the vehicle speed VSP is decreased. At this time, the process proceeds along step S31→step S32→step S33 in the flowchart of FIG. 6 before the switching of the regenerative torque and the frictional torque. Then, the process repeats the flow of step S32→step S33. Then, when the switching of the regenerative torque and the frictional torque is started at the driving point B of FIG. 2, the process proceeds from step S32 to step S34. At step S34, it is judged whether or not the motor regenerative torque is decreased equal to or smaller than the motor torque step Mook to allow the shock. Then, when the motor regenerative torque ≤ Mook is judged at step S34, the process proceeds from step S34 to step S35. At step S35, the downshift start judgment is performed.

That is, in the third embodiment, the timing of the start of the coast downshift control to disengage the frictional clutch 9c is set to one timing of a region from a timing during the switching (the motor regenerative torque ≤ Mook) at the regenerative cooperative brake control ~ the vehicle stop.

FIG. 7 shows a time chart in the third embodiment in which the timing of the start of the coast downshift control is set to the timing (the motor regenerative torque ≤ Mook) during the switching at the regenerative cooperative braking.

When the switching at the regenerative cooperative braking control is started at time t1, the frictional torque by the frictional brake device 15 is increased at a constant gradient (the decrease in the motor shaft torque conversion), and the regenerative torque of the second motor generator MG2 is decreased at the constant gradient (the increase in the motor torque characteristic). Then, when it satisfies the motor regenerative torque ≤ Mook at time t2 during the switching, the coast downshift start judgment is performed. The pressing force of the frictional clutch 9c (2nd clutch pressing force) is decreased. After this time t2, the regenerative torque of the second motor generator MG2 is suddenly decreased to zero. The regenerative torque becomes zero at time t3. The vehicle acceleration generated at this time t3 is the shock permissible value dG. Moreover, the regenerative torque = 0 is maintained from time t3 to time t4. The frictional clutch 9c is fully released at time t4. The inertia phase in the neutral state is started.

Then, in the inertia phase from the time t4 of the frictional clutch disengagement completion to time t5, the power running torque is provided to the second motor generator MG2. The input rotation speed of the automatic transmission 3 (= the motor rotation speed) is increased toward the target input rotation speed at the low speed stage. Then, when the engagement clutch 8c is synchronously rotated at time t6, the synchronous engagement is started in accordance with the synchronous force. Then, the synchronous engagement is finished at time t7. The coast downshift from the high speed stage to the low speed stage is finished.

In this way, in a case where the timing of the start of the coast downshift control is set to a timing at which the motor regenerative torque ≤ Mook is satisfied during the switching at the regenerative cooperative brake control, the motor torque step Mook when the frictional clutch 9c is fully disengaged becomes equal to or smaller than a target value. The vehicle acceleration degree is within the shock permissible value dG, so that the vehicle becomes the good shift shock. In addition, the end of the switching of the regenerative cooperative brake control is not waited, and the coast downshift control is started. With this, the timing of the completion of the coast downshift from the high speed stage to the low speed stage becomes earlier than a case where the end of the switching is waited. Accordingly, the shift to the low speed stage is rapidly finished. Consequently, the response with respect to the re-acceleration request by the re-depression of the accelerator becomes good. Moreover, it is possible to actuate the motor at the earlier timing at the driving point at which the efficiency is good, and to improve the energy efficiency.

Besides, the other functions are identical to those of the first embodiment. Accordingly, the explanations are omitted.

Next, effects are explained.

The shift control device for the hybrid vehicle according to the third embodiment can attain the following effects.
(3) The shift control means (the shift controller 21) is configured to set the timing of the start of the coast downshift control to disengage the frictional element (the frictional clutch 9c), to a timing at which the regenerative torque by the electric motor (the second motor generator MG2) from the start of the switching by the regenerative cooperative brake control means (the integral controller 30) becomes equal to or smaller than the predetermined value (the motor torque step Mook) by which the shock is permitted (FIG. 6).

Accordingly, in addition to the effect (1) of the first embodiment, the coast downshift control is started at the timing at which the shock during the switching is allowed, it is possible to prevent the shift shock, and to ensure the response with respect to the re-acceleration and to improve the energy efficiency.

Hereinabove, the shift control device for the electric vehicle according to the present invention are explained with respect to the first to third embodiments. The discrete structure is not limited to these embodiments. The variation, the addition and so on of the design are permitted as long as it is deviated from the gist of the present invention defined in the claims.

In the first to third embodiments, the two step automatic transmission having the low side shift stage and the high side shift stage is exemplified as the automatic transmission 3. However, it is optional to employ the automatic transmission having a plurality of shift stages which are larger than the two shift stages as long as the automatic transmission has a shift stage at which the frictional element (the frictional clutch or the frictional brake) is released and the engagement element (the engagement clutch or the engagement brake) is released.

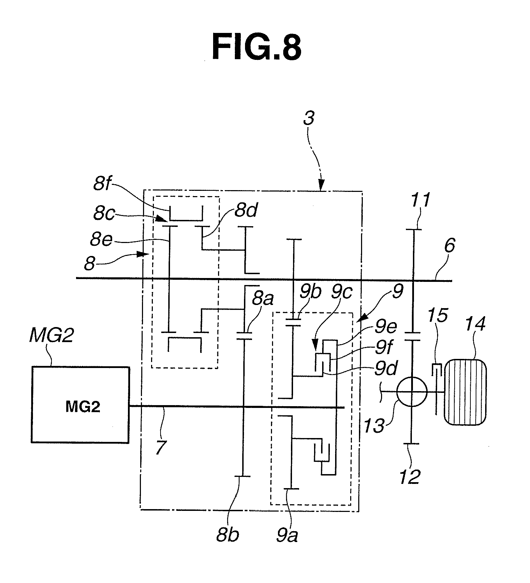

The first to third embodiments exemplify that the shift control device according to the present invention is applied to the hybrid vehicle. However, the shift control device according to the present invention is applicable to an electric vehicle which has an electric motor as the driving source. For example, as shown in FIG. 8, the shift control device according to the present invention is applicable to an electric vehicle which includes a driving system in which the engine 1, the first motor generator MG1, and the power distribution device 2 are removed from the driving system according to the first to third embodiments.

The present invention claims, as priority, a Japanese Patent Application No. 2012-43919 filed with Japanese Patent Office on February 29, 2012. The entire disclosure of that are incorporated in this specification by reference.

## Claims

1. A shift control device for an electric vehicle which includes an automatic transmission that is disposed in a driving system from an electric motor to a driving wheel, and that is arranged to perform a downshift by a combination of a disengagement of a frictional element and an engagement of an engagement element, and a shift control means configured to perform a shift control of the automatic transmission, the shift control device comprising:
a regenerative cooperative brake control means which is configured to perform a regenerative cooperative brake control by a switching to increase a frictional torque of a frictional brake device provided to the driving wheel to follow a decrease of a regenerative torque when the regenerative torque by the electric vehicle is decreased,
the shift control means setting a timing of a start of a coast downshift to disengage the frictional element, at least to a timing after a timing at which the switching of the regenerative cooperative brake control is started.

2. The shift control device for the electric vehicle as claimed in Claim 1, wherein the shift control means sets the timing of the start of the coast downshift to disengage the frictional element, to a timing of an end of the switching by the regenerative cooperative brake control means.

3. The shift control device for the electric vehicle as claimed in Claim 1, wherein the shift control means sets the timing of the start of the coast downshift to disengage the frictional element, to a timing at which the regenerative torque by the electric motor from a start of the switching by the regenerative cooperative brake control means becomes equal to or smaller than a predetermined value by which a shock is permitted.
